# EUROPEAN PATENT SPECIFICATION

(11) **EP 2 119 606 B1**
(45) Date of publication and mention of the grant of the patent: **11.07.2012**
(21) Application number: 08008854.5
(22) Date of filing: 13.05.2008
(51) Int. Cl.: B60R 25/00, B60R 25/04

(54) **Electronic anti-theft system for vehicle components**
Elektronisches Diebstahlsicherungssystem für Fahrzeugkomponenten
Système anti-vol électronique pour composants de véhicule

(43) Date of publication of application: 18.11.2009
(73) Proprietor: Delta Electronics, Inc., Taoyuan Hsien 333 (TW)
(72) Inventor: Sun, Chun-Yi, Taoyuan Hsien 333 (TW); Wu, Yuan-Ping, Taoyuan Hsien 333 (TW); Lin, Cheng-Bin, Taoyuan Hsien 333 (TW); Lin, Wei-Chun, Taoyuan Hsien 333 (TW); Tsai, Shin-Shiuan, Taoyuan Hsien 333 (TW)
(74) Representative: TER MEER - STEINMEISTER & PARTNER GbR

(56) References cited:
- EP-A- 0 682 608
- EP-A- 1 892 157
- DE-A1- 10 021 811
- DE-A1- 10 039 778
- DE-A1- 19 520 505
- US-A1- 2007 000 712

## Description

### BACKGROUND OF THE INVENTION

### 1. Field of the Invention

The present invention relates to an electronic anti-theft system for authorizing vehicle components, especially to an electronic anti-theft system utilizing CAN bus for authorizing vehicle components.

### 2. Description of Prior Art

Cars are convenient transportation tools for people and naturally the targets for theft due to the mobility thereof. Modem cars are generally equipped with expensive electronic sensors (controllers), navigation devices or entertainment devices as the progress of control, communication and display technologies. Therefore, it will be a serious loss for car owner if his/her car is stolen.

Vehicles anti-theft systems are helpful for vehicle owners to prevent car from stealing. Electronic vehicles anti-theft systems gradually replace the mechanic counterpart after 1990s. For example, immobilizer is an electronic vehicles anti-theft system, wherein a transponder in a key should be matched with a chip linked with engine system for normal operation. However, the immobilizer cannot solve the problem of breaking down cars into several components after the entire car is stolen. Even though ID code can be marked on the components of cars for identification, it is rare in chance to find the component after the car is stolen.

The employment of controllers is innovative progress for car industry. Interlink of the controllers in car is also important for ensuring performance of the controllers in cars. To this end, Controller-Area Networking BUS (CAN BUS) is devised for car to interlink the controllers.

For example, US Pat. No. 6,865,460 discloses a topology for CAN BUS communication network without using jumper or DIP. It is desirable to exploit the convenience provided by CAN BUS for providing antitheft function of vehicle. Therefore, the vehicle can be equipped with antitheft function without considerable hardware change.

DE 100 39 778 A1 describes a vehicle having an electronic operation system, which is individualized by an identification code, wherein plural networked electronic components of the electronic operation system include an identification code. With start-up of the operating system, a master checks whether all components have the same identification code. Regular operation of the vehicle is only possible when the identification codes are identical.

DE 100 21 811 A1 describes an arrangement for protecting the exchange of electronic components in a vehicle, wherein components of the vehicle are connected via a data line. Each component includes a memory containing an individual identification code. The operation system only allows the operation of the vehicle if all components include the same identification code.

### SUMMARY OF THE INVENTION

It is the object of the present invention to provide a CAN bus-based antitheft system, which utilizes identifier code to prevent illegal removal of vehicle components.

The object is solved by the features of the independent claims. Accordingly, the electronic anti-theft system utilizing Controller-Area Networking (CAN) bus for authorizing vehicle components comprises a central authorization module comprising a first CAN unit and storing at least one first identifier code; at least one electronic functional module, each comprising a vehicle electrical system identifier (VESI) device, the VESI device comprising a secure unit, a secure data storage electrically connected to the secure unit and a second CAN unit electrically connected to the secure unit, the secure data storage storing a second identifier code; and a CAN BUS electrically connected between the first CAN unit and the second CAN unit. The secure unit is configured to receive a first identifier code transmitted through the CAN BUS and compare the first identifier code with the second identifier code thereof. The central authorization module activates a normal function of the electronic functional module when the first identifier code is matched with the second identifier code of the electronic functional module.

The electronic functional module is one of trip computer module, Infotainment module, engine management module, Body Control Module (BCM), ABS (Antilock Brake System) module, EPS (Electrical Power Steering) module, fuel injection module, and steering lock/unlock module.

### BRIEF DESCRIPTION OF DRAWING

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows the block diagram of the electronic anti-theft system for vehicle components according to the present invention.
Fig. 2 shows the block diagram for the electronic functional module.
Fig. 3 shows the operation flowchart of the electronic anti-theft system according to the present invention.

### DETAILED DESCRIPTION OF THE INVENTION

The present invention is intended to provide an electronic anti-theft system for vehicle components, wherein the electronic anti-theft system comprises at least one electronic anti-theft device for vehicle component. In this invention, the electronic anti-theft device is referred as VESI (vehicle electrical system identifier) device for the purpose of demonstration. It should be noted that this nomenclature is for simplicity and not for imposing limitation on the scope of the present invention.

According to the present invention, each vehicle is provided with a VESI device in a central authorization module and each of electronic functional modules (including but not limited to engine management module, power steering module, ABS module and steering lock/unlock module). Each of the VESI modules is assigned with a specific identifier code. The central authorization module has memory to store the identifier codes of the electronic functional modules associated with the same vehicle. Moreover, the VESI device also has memory storing the identifier code of the central authorization module. When the electronic functional module according to the present invention is illegally removed and mounted to another vehicle, the electronic functional module malfunctions in case that it is not set by original software. The malfunction of the stolen electronic functional will discourage theft.

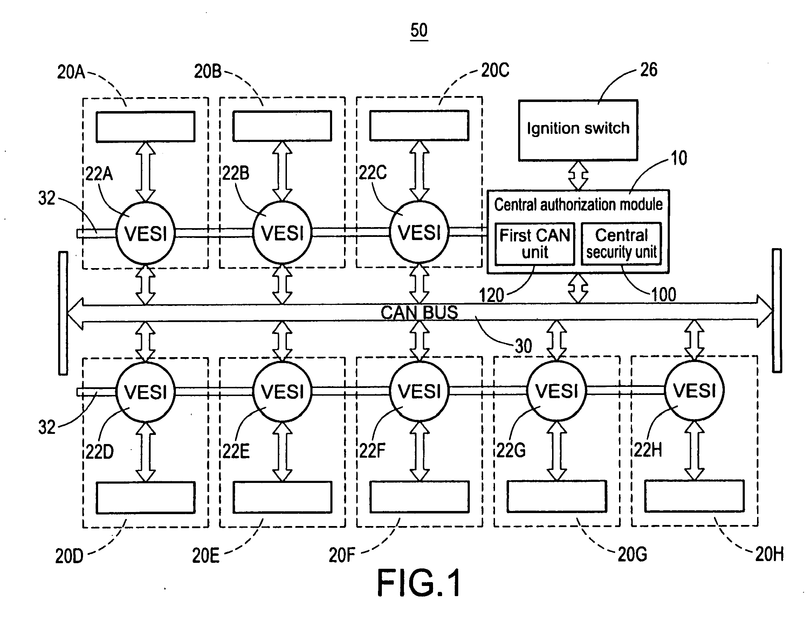

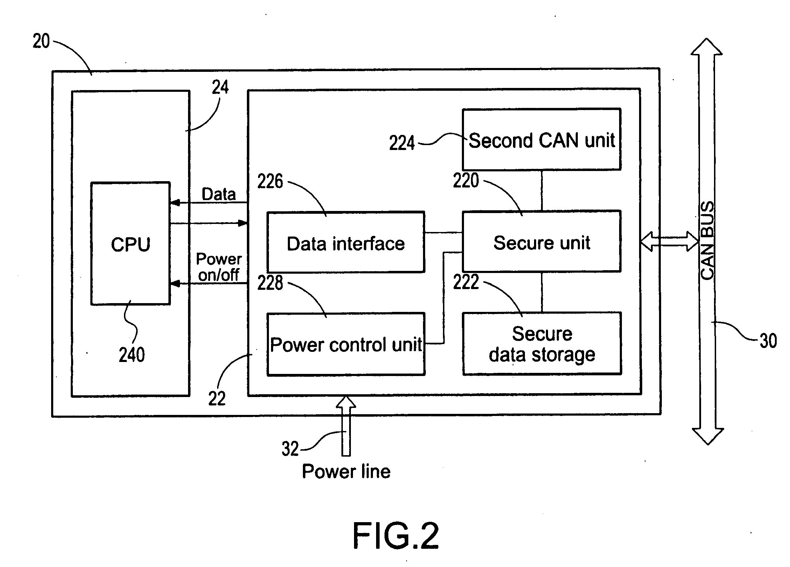

Fig. 1 shows the block diagram of the electronic anti-theft system for vehicle components according to the present invention. The electronic anti-theft system 50 comprises a central authorization module 10 performing authorization task for the system 50, a plurality of electronic functional modules (also referred to as electronic controller unit, ECU, in automotive electronics) 20, a CAN-BUS 30, a power line 32 and an ignition switch 26. The electronic functional modules 20 includes, but not limited to, trip computer module 20A, Infotainment module 20B, engine management module 20C, Body Control Module (BCM) 20D, ABS (Antilock Brake System) module 20E, EPS (Electrical Power Steering) module 20F, fuel injection module 20G, steering lock/unlock module 20H. With reference to Fig. 2, each of the electronic functional modules 20 comprises a functional device 24 and a VESI device 22. The VESI device 22 collectively represents VESI module 22A, 22B, 22C, 22D, 22E, 22F, 22G and 22H and is exemplified by numeral 22 in Fig. 2.

As shown in Fig. 1, the central authorization module 10 is electrically connected to the ignition switch 26, and electrically connected to the VESI device 22 in all of the electronic functional modules 20 through the CAN BUS 30. The power line 32 is electrically connected to the central authorization module 10 and the VESI device 22 in all of the electronic functional modules 20. By the control of the central authorization module 10 and the VESI device 22, the electrical power from the power line 32 can be selectively supplied to the functional devices 24 to activate or stop the normal function of the functional devices 24. This will be described in more detail later. The central authorization module 10 comprises a central security unit 100 and a first CAN unit 120. The central security unit 100 has command-processing ability and can be implemented by a micro processor. The micro processor preferably has a memory to store a first identifier.

Fig. 2 shows the block diagram for the electronic functional module 20, which comprises the VESI device 22 and the function device 24. The function device 24 comprises a central processing unit (CPU) 240. The VESI device 22 comprises a secure unit 220, a secure data storage 222, a second CAN unit 224, a data interface 226, and a power control unit 228. The VESI device 22 communicates with the CAN BUS 30 through the second CAN unit 224. Accordingly, the VESI device 22 can also communicate with the central authorization module 10. The secure unit 220 also has command processing ability and can be implemented by a micro processor. The VESI device 22 receives electrical power from the power line 32 and selectively supplies the electrical power to the function device 24 by the power control unit 228. The function device 24 further comprises interface unit (not shown) electrically connected to the VESI device 22 for exchanging data with the VESI device 22. Moreover, the CPU 240 performs predetermined functions for the electronic functional modules 20 such as Infotainment, engine management, BCM or ABS.

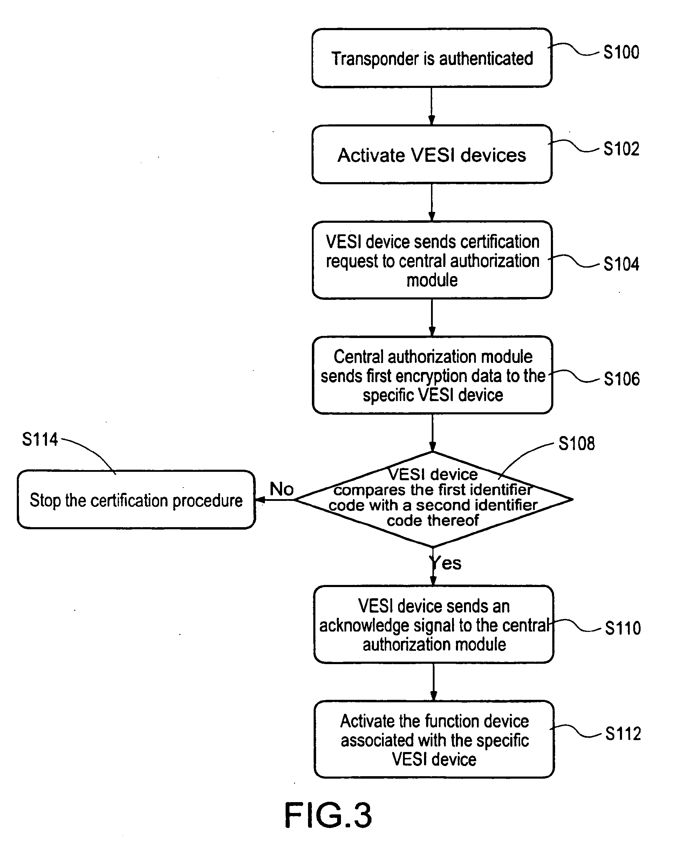

Fig. 3 shows the operation flowchart of the electronic anti-theft system according to the present invention. At the beginning, the central authorization module 10 examines whether a transponder in a vehicle key has passed an authentication. After the transponder in the vehicle key is authenticated (S100), the central authorization module 10 activates all of the VESI devices (S102). The central authorization module 10 then performs certification for the VESI device, where each of the VESI devices sends a certification request to the central authorization module 10 (S104). The central authorization module 10 generates a first encryption data by combining a first identifier code associated with the specific VESI device and the certification request, and then sends the first encryption data to the specific VESI device (S106). The VESI device receiving the first encryption data decrypts the first encryption data to obtain the first identifier code and then compares the first identifier code with a second identifier code thereof (S108). When the comparison is matched, the VESI device sends an acknowledge signal to the central authorization module 10 (S110). After the central authorization module 10 receives the acknowledge signal from the specific VESI device, the central authorization module 10 activates the function device associated with the specific VESI device (S112). For example, the central authorization module 10 can activate the function device by controlling the power control unit 228 to supply power to the function device. When the central authorization module 10 does not receive the acknowledge signal from the specific VESI device, the central authorization module 10 stops the certification procedure (S114).

By the above-mentioned certification procedure, the central authorization module 10 can check whether the electronic functional modules 20 are the original ones for the same vehicle as that the of the central authorization module 10. The central authorization module 10 activates the normal function of the electronic functional modules 20 after confirming the certification procedure. When any one of the electronic functional modules 20 is illegally assembled or not the original equipment, the electronic functional module 20 does not have identifier code matched that of the central authorization module 10. The central authorization module 10 will not activate the electronic functional module 20; therefore, the vehicle with the illegally assembled and crucial component cannot have normal operation. This will discourage theft. Moreover, the central authorization module 10 can be assigned with different first identifier codes for different electronic functional module 20 to prevent the identifier codes from hacking. Moreover, the electronic functional modules 20 are not limited to above examples, namely, trip computer module 20A, Infotainment module 20B, engine management module 20C, BCM 20D, ABS module 20E, EPS module 20F, fuel injection module 20G, and steering lock/unlock module 20H. The electronic functional modules 20 can be other crucial vehicle components and are also in the claim scope of the present invention. In above description, the central authorization module 10 comprises a central security unit 100 and a first CAN unit 120. However, the central authorization module 10 can also be incorporated with the VESI device 22 to exploit the interface and data processing ability of the VESI device 22.

In the vehicle equipped with the electronic anti-theft system of the present invention, the central authorization module and the electronic functional module will examine the identifier codes in their VESI devices for each other when the vehicle is started. The electronic functional module cannot communicate with the CAN BUS when the identifier codes in VESI devices are not matched. Therefore, the intention of stealing crucial vehicle components for other vehicle will be blocked.

## Claims

1. An electronic anti-theft system (50) utilizing a controller-area networking bus hereinafter called CAN bus (30), for authorizing vehicle components, comprising:
o a central authorization module (10) comprising a first CAN unit (120) and storing at least one first identifier code;
o at least one electronic functional module (20), each comprising a vehicle electrical system identifier device (22), hereinafter called VESI device (22), and a functional device (24), the VESI device (22) comprising:
o a secure unit (220),
o a secure data storage (222) storing a second identifier code and being electrically connected to the secure unit (220),
o a second CAN unit (224) electrically connected to the secure unit (220) and
o a power control unit (228) selectively supplying power to the functional device (24);
o the CAN bus (30) electrically connected between the first CAN unit (120) and the second CAN unit (224), and
o a power line (32) electrically connected to the central authorization module (10) and to the power control unit (228) of the VESI device (22) of the at least one electronic functional module (20);
wherein the central authorization module (10) activates all of the VESI devices (20; S 102) and performs certification for the VESI devices (22), whereby
o each of the VESI devices (22) sends a certification request to the central authorization module (10; S104),
o the central authorization module (10) generates a first encryption data by combining the first identifier code associated with the specific VESI device (22) and the certification request, and then sends the first encryption data to the specific VESI device (22; S106),
o the VESI device (22) receiving the first encryption data decrypts the first encryption data to obtain the first identifier code and then compares the first identifier code with the second identifier code thereof (S108), and when the comparison is matched, the VESI device (22) sends an acknowledge signal to the central authorization module (10; S110),
o after the central authorization module (10) receives the acknowledge signal from the specific VESI device (22), the central authorization module (10) activates the functional device (24) associated with the specific VESI device (22; S112) by controlling the power control unit (228) to supply power to the functional device (24); and
o when the central authorization module (10) does not receive the acknowledge signal from the specific VESI device (22), the central authorization module (10) stops the certification procedure (S 114).

2. The system in claim 1, wherein the VESI device (22) further comprises a data interface (226), which is electrically connected to the electronic functional unit (24).

3. The system in claim 1, wherein the central authorization module (10) further comprises a central security unit (120) configured to activate the normal function of the electronic functional module (20) when the first identifier code is matched with the second identifier code of the electronic functional module (20).

4. The system in claim 1, wherein the electronic functional module (20) is one of trip computer module, Infotainment module, engine management module, body control module (BCM), ABS (antilock brake system) module, EPS (electrical power steering) module, fuel injection module, and steering lock/unlock module

5. The system in claim 1, wherein the vehicle is car.

## Patentansprüche

1. Elektronisches Diebstahlsicherungssystem (50), das einen "Controller-Area Networking"-Bus, nachfolgend als CAN-Bus (30) bezeichnet, benutzt, um Fahrzeugkomponenten zu autorisieren, und umfasst:
- ein zentrales Autorisierungsmodul (10), das eine erste CAN-Einheit (120) umfasst und wenigstens einen ersten Kennungscode speichert;
- wenigstens ein elektronisches Funktionsmodul (20), wovon jedes eine Fahrzeugbordnetz-Kennungseinrichtung (22), nachstehend als VESI-Einrichtung (22) bezeichnet, und eine Funktionseinrichtung (24) umfasst, wobei die VESI-Einrichtung (22) umfasst:
- eine Sicherheitseinheit (220),
- einen Sicherheitsdatenspeicher (222), der einen zweiten Kennungscode speichert und elektrisch mit der Sicherheitseinheit (220) verbunden ist,
- eine zweite CAN-Einheit (224), die elektrisch mit der Sicherheitseinheit (220) verbunden ist, und
- eine Leistungssteuereinheit (228), die die Funktionseinrichtung (24) wahlweise mit Leistung versorgt;
- den CAN-Bus (30), der elektrisch zwischen die erste CAN-Einheit (120) und die zweite CAN-Einheit (224) geschaltet ist, und
- eine Stromleitung (32), die elektrisch mit dem zentralen Autorisierungsmodul (10) und der Leistungssteuereinheit (228) der VESI-Einrichtung (22) des wenigstens einen elektronischen Funktionsmoduls (20) verbunden ist;
wobei das zentrale Autorisierungsmodul (10) alle VESI-Einrichtungen (20; S 102) aktiviert und die Zertifizierung für die VESI-Einrichtungen (22) durchführt, wobei
- jede der VESI-Einrichtungen (22) eine Zertifizierungs-Anforderung an das zentrale Autorisierungsmodul (10; S 104) sendet,
- das zentrale Autorisierungsmodul (10) erste Verschlüsselungsdaten durch Kombinieren des ersten Kennungscodes, welcher der speziellen VESI-Einrichtung (22) zugeordnet ist, mit der Zertifizierungs-Anforderung erzeugt und dann die ersten Verschlüsselungsdaten zu der speziellen VESI-Einrichtung (22) sendet (22; S 106),
- die VESI-Einrichtung (22) dann, wenn sie die ersten Verschlüsselungsdaten empfängt, die ersten Verschlüsslungsdaten entschlüsselt, um den ersten Kennungscode zu erhalten, und dann den ersten Kennungscode mit dem zweiten Kennungscode hiervon vergleicht (S108) und, wenn der Vergleich eine Übereinstimmung ergibt, ein Quittungssignal zum zentralen Autorisierungsmodul (10; S110) sendet,
- dann, wenn das zentrale Autorisierungsmodul (10) das Quittungssignal von der speziellen VESI-Einrichtung (22) empfangen hat, das zentrale Autorisierungsmodul (10) die Funktionseinrichtung (24) aktiviert, die der speziellen VESI-Einrichtung (22; S112) zugeordnet ist, indem sie die Leistungssteuereinheit (228) steuert, damit sie die Funktionseinrichtung (24) mit Leistung versorgt; und
- dann, wenn das zentrale Autorisierungsmodul (10) das Quittungssignal von der speziellen VESI-Einrichtung (22) nicht empfängt, das zentrale Autorisierungsmodul (10) die Zertifizierungsprozedur beendet (S114).

2. System nach Anspruch 1, wobei die VESI-Einrichtung (22) ferner eine Datenschnittstelle (226) umfasst, die elektrisch mit der elektronischen Funktionseinheit (24) verbunden ist.

3. System nach Anspruch 1, wobei das zentrale Autorisierungsmodul (10) ferner eine zentrale Sicherheitseinheit (120) umfasst, die konfiguriert ist, um die normale Funktion des elektronischen Funktionsmoduls (20) zu aktivieren, wenn der erste Kennungscode mit dem zweiten Kennungscode des elektronischen Funktionsmoduls (20) übereinstimmt.

4. System nach Anspruch 1, wobei das elektronische Funktionsmodul (20) ein Bordcomputermodul, ein Infotainmentmodul, ein Motormanagementmodul, ein Karosseriesteuermodul (BCM), ein ABS-Modul (Modul für Antiblockierbremssystem), ein EPS-Modul (Modul für elektrische Servolenkung), ein Kraftstoffeinspritzungsmodul oder ein Lenkradverriegelungs-/-entriegelungsmodul ist.

5. System nach Anspruch 1, wobei das Fahrzeug ein Auto ist.

## Revendications

1. Système antivol électronique (50) utilisant un bus CAN (30), pour autoriser des composants de véhicule, comprenant :
un module d'autorisation central (10) comprenant une première unité CAN (120) et stockant au moins un premier code identificateur ;
au moins un module fonctionnel électronique (20), chacun comprenant un dispositif identificateur de système électrique de véhicule (22), appelé ici dispositif VESI (22) comprenant :
une unité sécurisée (220),
un stockage de données sécurisé (222) stockant un second code identificateur et étant connecté électriquement à l'unité sécurisée (220),
une seconde unité CAN (224) connectée électriquement à l'unité sécurisée (220) et
une unité de commande d'alimentation (228) fournissant sélectivement de l'énergie au dispositif fonctionnel (24) ;
le bus CAN (30) connecté électriquement entre la première unité CAN (120) et la seconde unité CAN (224), et
une ligne électrique (32) connectée électriquement au module d'autorisation central (10) et à l'unité de commande d'alimentation (228) du dispositif VESI (22) de l'au moins un module fonctionnel électronique (20) ;
dans lequel le module d'autorisation central (10) active tous les dispositifs VESI (20; S102) et réalise la certification des dispositifs VESI (22), moyennant quoi
chacun des dispositifs VESI (22) envoie une requête de certification au module d'autorisation central (10; S104),
le module d'autorisation central (10) génère une première donnée d'encryptage en combinant le premier code identificateur associé au dispositif VESI (22) spécifique et la requête de certification, et envoie ensuite la première donnée d'encryptage au dispositif VESI spécifique (22; S106),
le dispositif VESI (22) recevant la première donnée d'encryptage décrypte la première donnée d'encryptage pour obtenir le premier code identificateur et compare ensuite le premier code identificateur avec le second code identificateur de celui-ci (S108), et quand la comparaison correspond, le dispositif VESI (22) envoie un signal de reconnaissance au module d'autorisation centrale (10; S110),
après que le module d'autorisation central (10) a reçu le signal de reconnaissance du dispositif VESI (22) spécifique, le module d'autorisation central (10) active le dispositif fonctionnel (24) associé avec le dispositif VESI (22; S112) spécifique en commandant l'unité de commande d'alimentation (228) pour fournir de l'énergie au dispositif fonctionnel (24) ; et
quand le module d'autorisation central (10) ne reçoit pas le signal de reconnaissance du dispositif VESI (22) spécifique, le module d'autorisation central (10) stoppe la procédure de certification (S114).

2. Système selon la revendication 1, dans lequel le dispositif VESI (22) comprend en outre une interface de données (226), qui est connectée électriquement à l'unité fonctionnelle électronique (24).

3. Système selon la revendication 1, dans lequel le module d'autorisation central (10) comprend en outre une unité de sécurité centrale (120) configurée pour activer la fonction normale du module fonctionnel électronique (20) quand le premier code utilisateur correspond au second code identificateur du module fonctionnel électronique (20).

4. Système selon la revendication 1, dans lequel le module fonctionnel électronique (20) est l'un module d'ordinateur de route, un module d'information loisir, un module de gestion de moteur, un module de commande de carrosserie (BCM), un module ABS (système antiblocage), un module EPS (direction assistée électrique), un module d'injection de carburant, et un module de blocage/déblocage de direction.

5. Système selon la revendication 1, dans lequel le véhicule est une voiture particulière.
